# EUROPEAN PATENT SPECIFICATION

(11) **EP 2 925 801 B1**
(45) Date of publication and mention of the grant of the patent: **20.12.2017**
(21) Application number: 13795665.2
(22) Date of filing: 12.11.2013
(51) Int. Cl.: C08G 18/48, C08G 18/12, C08G 18/16, C08G 18/18, C08G 18/24, C08G 101/00

(54) **PROCESS FOR THE PRODUCTION OF POLYURETHANE FOAM USING TETRAALKYLSTANNOXY BASED CATALYST**
VERFAHREN ZUR HERSTELLUNG VON POLYURETHANSCHAUMSTOFF MITHILFE EINES TETRAALKYLSTANNOXY-BASIERTEN KATALYSATORS
PROCÉDÉ DE PRODUCTION D'UNE MOUSSE DE POLYURÉTHANE À L'AIDE D'UN CATALYSEUR À BASE DE TÉTRA-ALKYL-STANNOXY

(30) Priority: 29.11.2012 US 201261731165 P; 20.06.2013 IT MI20131026
(43) Date of publication of application: 07.10.2015
(73) Proprietor: Dow Global Technologies LLC, Midland, MI 48674 (US); Rohm and Haas Company, Philadelphia, PA 19106 (US)
(72) Inventor: SCUSSOLIN, Silvia, I-42047 Rolo (IT); ETZELSTORFER, Manfred, CH-9470 Buchs (CH); MANEGOLD, Cord, 78345 Moos (DE)
(74) Representative: Beck Greener
(86) International application number: PCT/US2013/069575
(87) International publication number: WO 2014/085077

(56) References cited:
- WO-A1-2004/000906
- WO-A1-2014/029801
- DE-A1-102009 028 631
- FR-A- 1 411 370
- US-A1- 2007 179 208

## Description

### Field

Embodiments relate to a process for the production of a polyurethane foam product, which process comprises reacting a polyisocyanate component and a polyol component in the presence of a catalyst component that includes at least a tetraalkylstannoxy based catalyst.

### Introduction

In view of toxicity concerns, the use of di-substituted organotin compounds (such as dioctyltin and dibutyltin) and tri-substituted organotin compounds (such as tributyltin and triphenyltin) in processes for manufacturing consumer goods is restricted in the European Union. To produce polyurethane foams for consumer goods such as shoe soles, dioctyltin and dibutyltin based catalysts are commonly used, e.g., as discussed in U.S. Patent Publication No. 2007/0179208. Accordingly, in view of the restrictions in the European Union, an alternative catalyst that provides similar benefits as the dioctyltin and dibutyltin based catalysts with respect to forming reliable final polyurethane products within a specified time range, e.g., with a minimum demolding time under 270 seconds, is sought. In this case, minimum demolding time refers to the minimum amount of time required before a process of removing a polyurethane foam from a mold (e.g., by mechanical means, by hand, or by the use of compressed air) can be performed.

The catalytic power of dialkyltin compounds such as dialkyltin dicarboxylate based compounds, e.g., as discussed in WO 2004/000906, and sulfur-containing dialkyltin compounds, e.g., as discussed in WO 2007/126613, for polyurethane reactions is known. However, polyurethane products formed used the dialkyltin based catalysts suffer from issues with respect to reliability of the final products and overall processing time, e.g., with respect to the minimum demolding time required to form the final products.

Tetraalkylstannoxy compounds have been disclosed in the prior art as one of several components within a stabilizer mixture for chlorine-containing polymers, e.g., as discussed in European Patent. No. 446,171. In particular, European Patent. No. 446,171 discloses, in part, that the stabilizer mixture contains (a) a sterically hindered amine, (b) an organic or inorganic zinc compound, (c) an organotin compound having the structure (A) shown below (where Z is C₁-C₂₀ alkyl and Z₁ is hydrogen, C₁-C₂₀ alkyl, C₃-C₂₀ alkenyl, C₅-C₈ cycloalkyl, phenyl, C₇-C₁₈ alkylphenyl, or C₇-C₉ phenylalkyl), and (d) a 1, 3-dicarbonyl compound having a defined structure. 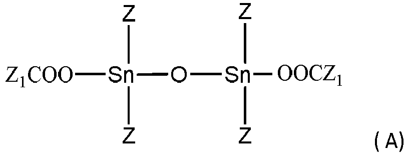 With respect to structure (A), above, European Patent. No. 446,171 does not disclose or suggest the use of tetraalkylstannoxy compounds as a catalyst in the process of producing a polyurethane foam product, as claimed herein.

### Summary

Embodiments may be realized by providing a process for the production of a polyurethane foam product that includes reacting a polyisocyanate component and a polyol component in the presence of a tetraalkylstannoxy based catalyst having a formula (I), 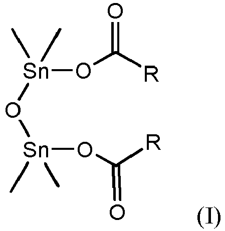 wherein R is a C₉-C₁₁ alkyl, a branched C₁₇ alkyl, a C₉-C₁₁ alkenyl, or a C₁₇ alkenyl.

### Detailed Description

Embodiments relate to the production of a reliable polyurethane foam product, such as a shoe sole and other vibration-absorbent elements, using a catalyst component that includes at least one tetraalkylstannoxy based catalyst. The embodiments encompass a polyurethane foam product formed from a reaction mixture that includes at least the tetraalkylstannoxy based catalyst, an isocyanate component, and a polyol component. The polyurethane foam product may also exhibit a minimum demolding time that is less than 270 seconds (e.g., less than 240 seconds) and a flex fatigue measurement that is greater than 15 kilocycles (e.g., equal to or greater than 20 kcycles), in which the polyurethane foam product is formed without using restricted di-substituted organotin or tri-substitited organotin catalytic compounds. For example, the polyurethane foam product is produced to be substantially free of any dioctyltin or dibutyltin based catalysts.

The polyurethane foam product is produced from polyurethane elastomers that are formed from a reaction mixture in which an isocyanate component is reacted with a polyol component in the presence of a catalyst component that includes at least a tetraalkylstannoxy based catalyst. The catalyst component includes a plurality of catalysts in which one or more of the individual catalysts corresponds to a tetraalkylstannoxy based catalyst. The catalyst component may be mixed with the polyol component to form a pre-reaction mixture, which pre-reaction mixture is prepared separately from the isocyanate component. Thereafter, the pre-reaction mixture including the polyol component and the catalyst component is mixed with the isocyanate component in the presence of at least one blowing agent (and optionally other additional auxiliary agents) to form the reaction mixture, which results in the formation of a polyurethane foam as a reaction product.

A total amount of the catalyst component in the pre-reaction mixture with the polyol component may be from 0.01 wt% to 4 wt% based on the total weight of the pre-reaction mixture. A total amount of the tetraalkylstannoxy based catalyst in the pre-reaction mixture is from 0.001 wt% to 1.00 wt% based on the total weight of the pre-reaction mixture. According to an exemplary embodiment, the total amount of the catalyst component in the pre-reaction mixture is from 1.5 wt% to 2.5 wt% and the total amount of the tetraalkylstannoxy based catalyst in the pre-reaction mixture is from 0.005 wt% to 0.05 wt% (e.g., is from 0.01 wt% to 0.02 wt%) based on the total weight of the pre-reaction mixture.

According to embodiments, the tetraalkylstannoxy based catalyst has a structure according to the following formula (I): 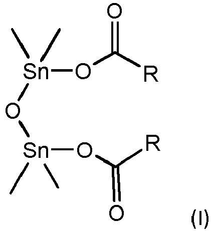 In formula (I), R may be a C₉-C₁₁ alkyle, a branched C₁₇ alkyl, a C₉-C₁₁ alkenyl, or a C₁₇ alkenyl. R may be a branched or unbranched C₉-C₁₁ alkyl, a branched C₁₇ alkyl, a branched or unbranched C₉-C₁₁ alkenyl, or a branched or unbranched C₁₇ alkenyl. For example, R is a C₉-C₁₁ branched alkyl such as a neodecanoate moiety. The tetraalkylstannoxy based catalyst may be a tetramethylstannoxy based catalyst.

Tetraalkylstannoxy based catalysts for use in the catalyst component include, e.g., a tetramethylstannoxy dineodecanoate catalyst, a tetramethylstannoxy bis-(C₁₂-C₁₈ carboxylate) catalyst, a tetramethylstannoxy dioleate catalyst, and a tetramethylstannoxy dilaurate catalyst. The catalyst component may include one or more tetraalkylstannoxy based catalysts.

According to an exemplary embodiment, formula (I) including a neodecanoate moiety is a tetramethylstannoxy dineodecanoate having the following formula (Ia): 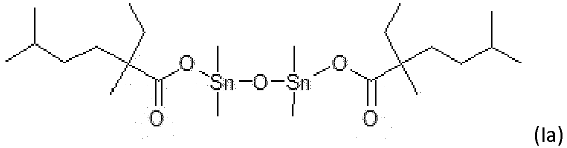 The tetramethylstannoxy dineodecanoate according to formula (Ia) (also referred to as 2,5-dimethyl-2-ethylhexanoic acid) may be prepared using neodecanoic acid and additional reaction components, and the reaction may be carried out in the following synthesis stages: 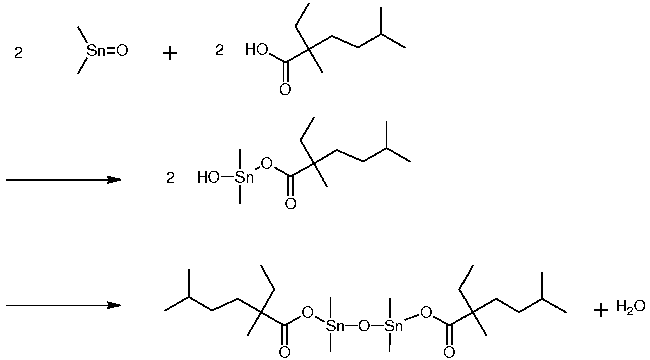 For example, the synthesis stages for forming the tetraalkylstannoxy based catalyst include contacting a dimethyl tin oxide with a fatty acid in a catalyst formation mixture and then heating the mixture. Thereafter, the removal of water leads to the production of the tetraalkylstannoxy based catalyst, which tetraalkylstannoxy based catalyst is then used to form the catalyst component for use in the reaction mixture.

In addition to the tetraalkylstannoxy based catalyst, the catalyst component may include at least one amine based catalyst, e.g., at least one tertiary amine based catalyst. Exemplary amine based catalysts include a triethylendiamine (TEDA) based catalyst, a triethanolamine (TEA) based catalyst, a diisopropylethanolamine (DIEA) based catalyst, a pentamethyldiethylenetriamine based catalyst, a tertamethyl butanediamine based catalyst, a dimethylcyclohexylamine based catalyst, a bis(dimethylaminopropyl)methylamine based catalyst, and a 1,8-diazobicyclo[5,4,0]unde-7-cene (DBU) based catalyst.

According to an exemplary embodiment, the remainder of the catalyst component that is not the tetraalkylstannoxy based catalyst, is a combination of at least two different tertiary amine based catalysts, and the total amount of the at least two different tertiary amine based catalysts is greater than the amount of the tetraalkylstannoxy based catalyst in the catalyst component. The tetraalkylstannoxy based catalyst may represent from 0.5 wt% to 3.0 wt% of the total weight of the catalyst component, which includes the at least two different tertiary amine based catalysts. According to embodiments, the catalyst component, the pre-reaction mixture, and the reaction mixture each exclude, e.g., be substantially free of, any di-substituted organotin catalysts such as any dioctyltin based catalysts and any dibutyltin based catalysts.

The isocyanate component may include at least one selected from the group of an aliphatic polyisocyanate, a cycloaliphatic polyisocyanate, or an aromatic polyisocyanate. For example, the isocyanate component may include at least one aromatic polyisocyanate. The isocyanate component may include one polyisocyanate or a mixture of a plurality of different polyisocyanates. For example, the isocyanate component may include at least one selected from the group of methylene diphenyl diisocyanate (MDI), tetramethylene diisocyanate, hexamethylene diisocyanate (HDI), and toluene diisocyanate (TDI). The isocyanate component may have a NCO content from 10 wt% to 25 wt%, e.g., a content of 18 wt% based on a total weight of the isocyanate component. The isocyanate component may be a NCO terminated prepolymer, e.g., the isocyanate component may be based on an aromatic polyisocyanate and polyether diols and triols.

The polyol component may include at least one polyol having a functionality from 2 to 8. The polyol component may include at least one of a polyether polyol and a polyester polyol. The polyol component may include one polyol, or a mixture of a plurality of different polyols. The polyol component may include at least one polyol that has an average molecular weight from 2000 to 8000, e.g., from 3500 to 6500. The polyol component may include at least one ethylene oxide-capped polypropylene oxide based polyol. Such as is discussed in WO 2002/050151 and WO 2011/157510.

According to an exemplary embodiment, the polyol component may include a mixture of at least one diol and at least one triol. For example, the mixture of polyols may include 60 wt% to 90 wt% (e.g., from 70 wt% to 85 wt%) of a diol, and may include 10 wt% to 30 wt% (e.g., from 15 wt% to 25 wt%) of a triol, based on a total weight of the mixture of polyols. The polyol component may also include a grafted polyol in addition to the at least one diol and the at least one triol. For example, the mixture of polyols may include 1 wt% to 10 wt% (e.g., from 3 wt% to 7 wt%) based on a total weight of the mixture of polyols.

In addition to the catalyst component that includes at least one tetraalkylstannoxy based catalyst, the reaction mixture of the isocyanate component and the polyol component may include at least one auxiliary agent selected from the group of a blowing agent, a cell regulator, a mold release agent, a pigment, a reinforcing material such as a glass fiber, a surface-active compound, and/or a stabilizer. The blowing agent may be one selected from the group of water, hydrocarbons, chlorofluorocarbons, and hydrogenated fluorocarbons. Each of the auxiliary agents is added to one of the pre-reaction mixture (which includes the polyol component and the tetraalkylstannoxy based catalyst), to the isocyanate component, or to the reaction mixture.

The reaction mixture may include 20 wt% to 50 wt% of the isocyanate component based on a total weight of the reaction mixture (which is based on 100 weight percent of a combination of the catalyst component, the polyol component, the isocyanate component, and all auxiliary agents). The reaction mixture may include 40 wt% to 80 wt% of the polyol component based on the total weight of the reaction mixture.

The process of forming the polyurethane foam product includes the stages of forming the reaction mixture by reacting the polyol component and the isocyanate component in the presence of at least the tetraalkylstannoxy based catalyst (e.g., at least one auxiliary agent such as the blowing agent may also be present in the stage of forming the reaction mixture), and pouring the reaction mixture into a mold to form the polyurethane foam. The polyurethane foam may be molded to have a density from 150 g/l to 1200 g/l (e.g., from 400 g/l to 1000 g/l, from 400 g/l to 800 g/l, or from 550 g/l to 600 g/l.

The stages of forming the reaction mixture and forming the polyurethane foam may include using a blowing machine such as an automatically mixing and injecting foaming machine or an automatically blending and injecting machine. When the polyurethane foam is used to form shoe soles, the shoe soles themselves may be formed separately from other components of the shoe or may be directly injected onto one of the other components of the shoe. According to exemplary embodiments, the shoe sole may be used for forming an outer sole of a sandal type shoe, a midsole of an athletic type shoe, or an inner sole for insertion into any type of shoe.

### Examples

The following materials are principally used:

| | |
|---|---|
| VORALAST™ GE 128 | An isocyanate polyether prepolymer based on MDI and polyether diols and triols having an average NCO content of 20.8 wt% (available from The Dow Chemical Company). |
| VORANOL™ EP 1900 | A polyoxypropylene - polyoxyethylene polyol, which is ethylene oxide-terminated, having a theoretical OH functionality of 2, an average molecular weight of about 4000, and a nominal average |
| | hydroxyl number of 28 mg KOH/g (available from The Dow Chemical Company). |
| VORANOL™ CP 6001 | A glycerol initiated polyoxypropylene - polyoxyethylene polyol, which is ethylene oxide-terminated, having a theoretical OH functionality of 3, an average molecular weight of about 6000, and a nominal average hydroxyl number of 26-29 mg KOH/g (available from The Dow Chemical Company). |
| SPECFLEX™ NC 138 | A glycerol initiated polyoxypropylene -polyoxyethylene polyol, having a theoretical OH functionality of 3, an average molecular weight of about 5700, and a nominal average hydroxyl number of 29.5 mg KOH/g (available from The Dow Chemical Company). |
| NIAX™ L-6900 | A stabilizer that is a non-hydrolyzable silicone copolymer having an average hydroxyl number of 49 mg KOH/g (available from Momentive Performance Materials Inc). |
| DABCO® 33 LB | A catalyst that is a solution of 33 wt% triethylendiamine (TEDA) diluted in 67 wt% of 1,4-butanediol and has a nominal average hydroxyl number of 821 mg KOH/g (available from Air Products & Chemicals, Inc.). |
| POLYCAT® 77 | A catalyst that is a bis(dimethylaminopropyl)methylamine based solution having a specific gravity of 0.85 at 25°C (g/cm³) and a viscosity of 3 mPa*s at 25°C (available from Air Products & Chemicals Inc.). |
| POLYCAT® SA-1/10 | A catalyst that is 1,8-diazobicyclo[5,4,0]unde-7-cene (DBU) based solution, having a nominal average hydroxyl number of 83.5 mg KOH/g (available from Air Products & Chemicals Inc.). |
| HFA 134a | A blowing agent that is 1,1,1,2-tetrafluoroethane. |
| TEGOSTAB™ B 2114 | A silicon-based surfactant (available from Evonik Industries). |
| FOMREZ™ UL 38 | A dioctyltin carboxylate catalyst (available from Momentive Performance Materials Inc). |
| METATIN™ 1213 | A dimethyltin-di-2-ethylhexyl thioglycolate catalyst (available from Acima Speciality Chemicals, Inc., a subsidiary of The Dow Chemical Company). |
| METATIN™ 1215 | A dimethyltin didodecylmercaptan catalyst (available from Acima Speciality Chemicals, Inc., a subsidiary of The Dow Chemical Company). |

The following formulated polyols, according to the exemplary embodiments of Examples 1 and 2, are each individually reacted with the VORALAST™ GE 128 isocyanate component to form polyurethane foams. In particular, 100 parts by weight of each of the formulated polyols of Examples 1 and 2 is reacted with 54 parts by weight of the VORALAST™ GE 128 isocyanate component. The formulated polyols of Examples 1 and 2 include a catalyst component that has a tetraalkylstannoxy based catalyst (e.g., instead of a dioctyltin based catalyst such as FOMREZ UL 38). As shown in Table 1, below, Examples 1 and 2 include 0.01 wt% and 0.02 wt%, respectively, of tetramethylstannoxy dineodecanoate in the catalyst component.

**Table 1**

| **Raw Material** | **Example 1** | **Example 2** |
|---|---|---|
| | Amount, wt % | Amount, wt% |
| Voranol EP 1900 | 64.73 | 64.73 |
| 1,4-butanediol | 8.6 | 8.6 |
| Voranol CP 6001 | 17.0 | 17.0 |
| Specflex NC 138 | 4.60 | 4.60 |
| Niax L-6900 | 0.35 | 0.35 |
| Dabco 33 LB | 1.30 | 1.30 |
| Polycat 77 | 0.10 | 0.10 |
| HFA 134a | 2.50 | 2.50 |
| Polvcat SA-1/10 | 0.10 | 0.10 |
| Tegostab B 2114 | 0.58 | 0.58 |
| Tetramethylstannoxy dineodecanoate (DOT free catalyst) | 0.01 | 0.02 |
| Water | 0.13 | 0.12 |

A formulated polyol for Example 3 replaces the 0.02 wt% of tetramethylstannoxy dineodecanoate in Example 2 with 0.02 wt% of FOMREZ™ UL 38. The formulated polyol for Example 3 is reacted with the VORALAST™ GE 128 isocyanate component to form a polyurethane foam. In particular, 100 parts by weight of the formulated polyol for Example 3 is reacted with 54 parts by weight of the VORALAST™ GE 128 isocyanate component.

Formulated polyols for Comparative Examples 4 and 5 replace the 0.01 wt% and the 0.02 wt% of tetramethylstannoxy dineodecanoate in Examples 1 and 2, with 0.01 wt% and the 0.02 wt% of METATIN™ 1213 catalyst, respectively. Formulated polyols for Comparative Examples 6 and 7 replace the 0.01 wt% and the 0.02 wt% of tetramethylstannoxy dineodecanoate in Examples 1 and 2, with 0.01 wt% and the 0.02 wt% of METATIN™ 1215 catalyst, respectively. The formulated polyols for Comparative Examples 4-7 are each individually reacted with the VORALAST™ GE 128 isocyanate component to form polyurethane foams. In particular, 100 parts by weight of each of the formulated polyols of Examples 4-7 is reacted with 54 parts by weight of the VORALAST™ GE 128 isocyanate component.

Samples of the resultant reaction products of Examples 1-7 are each prepared (test plates are formed using molds and each test plate has a size of 200 x 200 x 10 mm) and the samples are evaluated with respect to reactivity and physical-mechanical properties, as shown below in Table 2. In particular, cream time (ASTM D7487-8), gel time (ASTM D2471), pinch time (ASTM D7487-8), imprintability (ASTM D7487-8), fine root density (ISO 845), minimum demolding time (using the Dog Ear Test with mold temperature at 50°C), tear strength (DIN 53543), tensile strength (DIN 53543), elongation (DIN 53543), flex fatigue (DIN 53543, "De Mattia" flexing machine), and hardness (according to ISO 868) are measured for each of Examples 1-7.

**Table 2**

| | **Example 1** | **Example 2** | **Example 3** | **Example 4** | **Example 5** | **Example 6** | **Example 7** |
|---|---|---|---|---|---|---|---|
| | Exemplary Embodiments | | Reference Example | Comparative Examples | | | |
| **Reactivity** | | | | | | | |
| Cream Time (s) | 6/7 | 5/6 | 7 | 7/8 | 7 | 6/7 | 5/6 |
| Gel time (s) | 14 | 13 | 15 | 18 | 17 | 17 | 13 |
| Pinch time (s) | 29 | 26 | 25 | 34 | 30 | 31 | 27 |
| Imprintability (s) | 33/34 | 31 | 30 | 38 | 35 | 34 | 31/32 |
| Fine root density (g/l) | 235 | 226 | 230 | 226 | 232 | 227 | 224 |
| Minimum demolding time | 235 | 210 | 210 | >270 | >270 | >270 | >270 |

| **Physical-Mechanical properties** | | | | | | | |
|---|---|---|---|---|---|---|---|
| Tear (N/mm) | 5.3 | 4.7 | 5.1 | 5.1 | 5.2 | 5.0 | 5.5 |
| Tensile (N/mm^2) | 4.1 | 4.3 | 4.2 | 3.6 | 4.2 | 4.1 | 4.1 |
| Elongation (%) | 434 | 453 | 413 | 413 | 450 | 429 | 454 |
| Flex fatigue (kcycles) | 20 | 20-30 | 20-30 | 10 | 10 | 10 | 20 |
| Hardness (ShA) | 55 | 54 | 55 | 54 | 54 | 54 | 55 |

The replacement of dioctyltin based catalysts (Example 3) with dimethyltin dicarboxylate based catalysts or with sulfur-containing diamethyltin based catalysts (Examples 4-7) in polyurethane systems demonstrate decreased flex fatigue and longer minimum demolding times for the final polyurethane foam, which can lead to productivity issues for final end users. However, according to embodiments, the use of tetraalkylstannoxy based catalyst such as tetramethylstannoxy dineodecanoate (Examples 1 and 2) provides both increased flex fatigue and shorter minimum demolding times relative to the dimethyltin dicarboxylate based catalysts and the sulfur-containing diamethyltin based catalysts. Accordingly, the tetraalkylstannoxy based catalyst is demonstrated as a more viable replacement for di-substituted organotin compounds such as the dioctyltin based catalysts.

## Claims

1. A process for the production of a polyurethane foam product, the process comprising reacting a polyisocyanate component and a polyol component in the presence of a catalyst component that includes at least a tetraalkylstannoxy based catalyst having a formula (I), 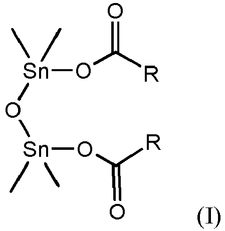 wherein R is a C₉-C₁₁ alkyl, a branched C₁₇ alkyl, a C₉-C₁₁ alkenyl, or a C₁₇ alkenyl.

2. The process as claimed in claim 1, wherein R is a C₉-C₁₁ alkyl.

3. The process as claimed in claim 1, wherein R is a C₉-C₁₁ branched alkyl.

4. The process as claimed in claim 1, wherein the tetraalkylstannoxy based catalyst is a tetramethlystannoxy dineodecanoate catalyst.

5. The process as claimed in any one of claim 1-4, wherein the catalyst component further includes at least one amine based catalyst.

6. The process as claimed in any one of claims 1-4, wherein the tetraalkylstannoxy based catalyst is present in an amount of 0.005 wt% to 0.05 wt% based on a total weight of the polyol component.

7. The process as claimed in any one of claims 1-4, wherein the tetraalkylstannoxy based catalyst is present in an amount of 0.01 wt% to 0.02 wt% based on a total weight of the polyol component.

8. The process as claimed in any one of claims 1-4, wherein the polyurethane foam product is a shoe sole.

9. The process as claimed in claim 1-4, wherein the polyurethane foam product has a density from 150 g/l to 1200 g/l.

10. The process as claimed in claim 1-4, wherein a minimum demolding time of a reaction product formed after reacting the polyisocyanate component and the polyol component in the presence of the catalyst component is less than 270 seconds.

## Patentansprüche

1. Ein Verfahren zur Herstellung eines Polyurethanschaumstoffprodukts, wobei das Verfahren das Zur-Reaktion-Bringen einer Polyisocyanatkomponente und einer Polyolkomponente in Gegenwart einer Katalysatorkomponente, die mindestens einen Tetraalkylstannoxy-basierten Katalysator mit einer Formel (I) umfasst, beinhaltet, 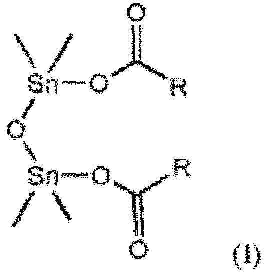 wobei R ein C₉-C₁₁-Alkyl, ein verzweigtes C₁₇-Alkyl, ein C₉-C₁₁-Alkenyl oder ein C₁₇-Alkenyl ist.

2. Verfahren gemäß Anspruch 1, wobei R ein C₉-C₁₁-Alkyl ist.

3. Verfahren gemäß Anspruch 1, wobei R ein verzweigtes C₉-C₁₁-Alkyl ist.

4. Verfahren gemäß Anspruch 1, wobei der Tetraalkylstannoxy-basierte Katalysator ein Tetramethylstannoxydinodecanoat-Katalysator ist.

5. Verfahren gemäß einem der Ansprüche 1-4, wobei die Katalysatorkomponente ferner mindestens einen Amin-basierten Katalysator umfasst.

6. Verfahren gemäß einem der Ansprüche 1-4, wobei der Tetraalkylstannoxy-basierte Katalysator, bezogen auf ein Gesamtgewicht der Polyolkomponente, in einer Menge von 0,005 Gew.-% bis 0,05 Gew.-% vorhanden ist.

7. Verfahren gemäß einem der Ansprüche 1-4, wobei der Tetraalkylstannoxy-basierte Katalysator, bezogen auf ein Gesamtgewicht der Polyolkomponente, in einer Menge von 0,01 Gew.-% bis 0,02 Gew.-% vorhanden ist.

8. Verfahren gemäß einem der Ansprüche 1-4, wobei das Polyurethanschaumstoffprodukt eine Schuhsohle ist.

9. Verfahren gemäß Anspruch 1-4, wobei das Polyurethanschaumstoffprodukt eine Dichte von 150 g/l bis 1200 g/l aufweist.

10. Verfahren gemäß Anspruch 1-4, wobei eine minimale Entformungszeit eines Reaktionsprodukts, das nach dem Zur-Reaktion-Bringen der Polyisocyanatkomponente und der Polyolkomponente in Gegenwart der Katalysatorkomponente gebildet wird, weniger als 270 Sekunden beträgt.

## Revendications

1. Un procédé pour la production d'un produit en mousse de polyuréthane, le procédé comprenant la mise en réaction d'un composant polyisocyanate et d'un composant polyol en présence d'un composant de catalyseur qui inclut au moins un catalyseur à base de tétra-alkyl-stannoxy ayant une formule (I), 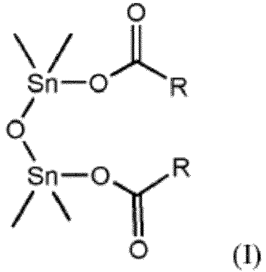 où R est un alkyle en C₉ à C₁₁, un alkyle ramifié en C₁₇, un alcényle en C₉ à C₁₁, ou un alcényle en C₁₇.

2. Le procédé tel que revendiqué dans la revendication 1, où R est un alkyle en C₉ à C₁₁.

3. Le procédé tel que revendiqué dans la revendication 1, où R est un alkyle ramifié en C₉ à C₁₁.

4. Le procédé tel que revendiqué dans la revendication 1, où le catalyseur à base de tétra-alkyl-stannoxy est un catalyseur dinéodécanoate tétra-méthyl-stannoxy.

5. Le procédé tel que revendiqué dans n'importe laquelle des revendications 1 à 4, où le composant de catalyseur inclut en sus au moins un catalyseur à base d'amine.

6. Le procédé tel que revendiqué dans n'importe laquelle des revendications 1 à 4, où le catalyseur à base de tétra-alkyl-stannoxy est présent en une quantité de 0,005 % en poids à 0,05 % en poids rapporté à un poids total du composant polyol.

7. Le procédé tel que revendiqué dans n'importe laquelle des revendications 1 à 4, où le catalyseur à base de tétra-alkyl-stannoxy est présent en une quantité de 0,01 % en poids à 0,02 % en poids rapporté à un poids total du composant polyol.

8. Le procédé tel que revendiqué dans n'importe laquelle des revendications 1 à 4, où le produit en mousse de polyuréthane est une semelle de chaussure.

9. Le procédé tel que revendiqué dans les revendications 1 à 4, où le produit en mousse de polyuréthane a une densité allant de 150 g/l à 1 200 g/l.

10. Le procédé tel que revendiqué dans les revendications 1 à 4, où un temps de démoulage minimum d'un produit de réaction, formé après la mise en réaction du composant polyisocyanate et du composant polyol en présence du composant de catalyseur, est inférieur à 270 secondes.
